# EUROPEAN PATENT SPECIFICATION

(11) **EP 3 623 265 B1**
(45) Date of publication and mention of the grant of the patent: **02.03.2022**
(21) Application number: 18194176.6
(22) Date of filing: 13.09.2018
(51) Int. Cl.: B62D 25/16

(54) **A MUDGUARD BRACKET ARRANGEMENT AND A USE OF A MUDGUARD BRACKET ARRANGEMENT**
SCHUTZBLECHHALTERUNGSANORDNUNG UND VERWENDUNG EINER SCHUTZBLECHHALTERUNGSANORDNUNG
AGENCEMENT DE SUPPORT DE GARDE-BOUE ET UTILISATION D'UN AGENCEMENT DE SUPPORT DE GARDE-BOUE

(43) Date of publication of application: 18.03.2020
(73) Proprietor: Oy Parlok AB, 21600 Parainen (FI)
(72) Inventor: ENQVIST, Aleksi, 21600 Parainen (FI); KOIVUNEN, Lasse, 20700 Turku (FI); NORAMAA, Antti, 20760 Piispanristi (FI)
(74) Representative: Berggren Oy

(56) References cited:
- EP-A1- 1 209 067
- DE-A1-102009 010 296
- DE-U1- 29 708 681
- GB-A- 2 365 396

## Description

### TECHNICAL FIELD OF THE INVENTION

The present invention relates to a mudguard bracket arrangement and a use of said mudguard bracket arrangement for fastening a mudguard to a support bar of a vehicle according to the preambles of the appended independent claims.

### BACKGROUND OF THE INVENTION

Traditionally, a mudguard of a commercial or a heavy goods vehicle is fastened above wheels of the vehicle to support bars that project outwards from the vehicle chassis in a direction substantially parallel to the vehicle wheel axles. Each mudguard is mounted to the support bar of the vehicle by suitable mounting brackets. A conventional mudguard mounting bracket comprises an upper plate placed on the upper surface of the mudguard and a lower plate placed on the underside of the mudguard. The bracket comprises also a clamping member by which the upper plate, the lower plate and the mudguard sandwiched between these are mounted to the support bar of the vehicle. The clamping member is usually fixed to the upper and/or the lower plate of the bracket and the parts are attached to each other by nuts and bolts. An example of a known mudguard mounting bracket is disclosed in GB 2 365 396 A, which discloses the preamble of claim 1.

A problem associated with the known mudguard mounting brackets is that the bracket parts are laborious and time-consuming to assemble to the mudguard and to the support bar of the vehicle. Another problem associated with the known mudguard mounting brackets is that they are difficult to pack, stack and to deliver to an end-user.

### OBJECTIVES OF THE INVENTION

It is the main objective of the present invention to reduce or even eliminate the prior art problems presented above.

It is an objective of the present invention to provide a mudguard bracket arrangement which is easy and quick to assemble.

It is another objective of the present invention to provide a mudguard bracket arrangement which facilitates packing of pre-assembled mudguards and reduces transportation costs. It is still another objective of the present invention to provide a mudguard bracket arrangement which eases and decreases the mounting work of an end-user.

It is a further objective of the present invention to provide a use of a mudguard bracket arrangement for connecting a mudguard to a support bar of a vehicle which is simple and easy.

In order to realise the above-mentioned objectives, the arrangement and the use according to the invention are characterised by what is presented in the characterising parts of the appended independent claims. Advantageous embodiments of the invention are described in the dependent claims.

### DESCRIPTION OF THE INVENTION

A mudguard bracket arrangement for fastening a mudguard to a support bar of a vehicle according to the invention comprises a first bracket part arrangeable on a top side of the mudguard, the first bracket part comprising an aperture, a second bracket part comprising a plate with a raised section, the plate being arrangeable on a bottom side of the mudguard and the raised section being arrangeable through the aperture of the first bracket part, and a third bracket part releasably attachable to the first and the second bracket part for connecting the first and the second bracket parts to the support bar of a vehicle. In a mudguard bracket arrangement according to the invention the first bracket part comprises a first quick clamping member and the second bracket part comprises a counterpart of the first quick clamping member for securing the first and the second bracket part to each other.

A mudguard bracket arrangement according to the invention is intended for fastening a mudguard to a support bar of a vehicle in such a manner that the mudguard suspends over a wheel of the vehicle. The support bar of the vehicle is fixed to a chassis of the vehicle and projects outwards from it in a direction substantially parallel to the vehicle wheel axle. The support bar has preferably a substantially circular cross-section. By the top side of the mudguard is meant the side directing away from the wheel and by the bottom side of the mudguard is meant the side directing towards the wheel when the mudguard is installed in place. The vehicle can be, for example, a commercial or a heavy-duty vehicle or a trailer. The mudguard bracket arrangement according to the invention provides for a simple and easy way of fastening the parts of the arrangement to the mudguard and to each other. The mudguard bracket arrangement according to the invention can be delivered to an end-user without connecting the third bracket part, because the quick clamping between the first and the second bracket parts enables the parts to stay together without the third bracket part and the other fastening means. This facilitates packing and stacking of the pre-assembled mudguards and decreases the mounting work of the end-user.

A mudguard referred here has preferably an arched shape and substantially planar top and bottom surfaces. The mudguard can be made, for instance, of plastics. The arrangement according to the invention is intended to be attached to the mudguard which comprises at least one aperture through which the raised section of the second bracket part can be arranged. The aperture is preferably formed in a longitudinal direction of the mudguard i.e. in a rotational direction of the wheel of the vehicle. The aperture formed in the mudguard is preferably elongated. The length of the aperture can be for example 150-180 mm in the rotational direction of the wheel of the vehicle and the width can be for example 10-14 mm. The mudguard may comprise more than one aperture.

The first bracket part is intended to be placed on the top side of the mudguard for supporting the mudguard from the top side and keeping the mudguard in place. The first bracket part is a plate like structure having a top surface and a bottom surface. When assembled, the bottom surface of the first bracket part can be in part or in whole in contact with the top surface of the mudguard. Preferably, the bottom surface of the first bracket part is in whole in contact with the top surface of the mudguard. The first bracket part is preferably elongated in a longitudinal direction of the mudguard i.e. in a rotational direction of the wheel of the vehicle and arched so that it can adapt the top surface of the mudguard. The length of the first bracket part can be for example 250-310 mm and the width can be for example 30-60 mm.

The first bracket part comprises a first end and a second end. Between the first and the second end the first bracket part comprises a central portion where an aperture is located. The central portion is preferably elevated so that the first bracket part is thicker from the central portion than from the first end and the second end. The aperture is preferably elongated in a same direction as the first bracket part. The aperture is located substantially in the middle of the first bracket part in both longitudinal and lateral direction of the first bracket part. The first bracket part is intended to be placed on the top side of the mudguard in such a manner that the aperture of the first bracket part and the aperture of the mudguard are one on top of the other. The length of the aperture of the first bracket part can be for example 80-120 mm and the width can be for example 10-14 mm. Preferably, the length of the aperture of the mudguard is longer than the length of the aperture of the first bracket part. The top surface of the first bracket part is arched towards the bottom surface from the central portion of the first bracket part, so that it can adapt to the support bar. Preferably, the arching is located in the middle of the first bracket part. At the central portion of the first bracket part, there is a first and a second mounting point for a third bracket part.

The second bracket part is intended to support the mudguard from the bottom side and keep the mudguard in place. The second bracket part comprises a plate with a raised section attached to it. The plate and the raised section comprise a top surface and a bottom surface. The raised section is attached to the top surface of the plate from its bottom surface. Preferably, the raised section is perpendicular to the plate. Preferably, the plate and the raised section are integral parts and the raised section is protruding from the top surface of the plate. The second bracket part is intended to be placed to the bottom side of the mudguard in such a manner that the top surface of the plate is arranged in whole or in part in contact with the bottom surface of the mudguard and the raised section is at least partly arranged through the apertures of the first bracket part and the mudguard. Preferably, the top surface of the plate is in whole in contact with the bottom surface of the mudguard for giving the mudguard a good support. The plate of the second bracket part is preferably elongated in a longitudinal direction of the mudguard i.e. in a rotational direction of the wheel of the vehicle. The length of the plate can be for example 120-160 mm and the width can be for example 40-60 mm. The plate can be arched, so that it can adapt the bottom surface of the mudguard. The plate is preferably substantially planar.

The raised section of the second bracket part is preferably elongated in a longitudinal direction of the mudguard i.e. in a rotational direction of the wheel of the vehicle. The length of the raised section can be for example 80-120 mm and the width can be for example 10-14 mm. The length and the width of the raised section is preferably the same or less than the length and the width of the aperture of the first bracket part and the aperture of the mudguard, so that the raised section can fit through the apertures. The raised section is located substantially in the middle of the plate, at least in lateral direction of the plate. Preferably, the raised section is located closer to another end of the plate in the longitudinal direction. The raised section comprises a first end and a second end between which the raised section comprises a central portion. The central portion of the raised section is preferably arched towards the plate, so that it can adapt to the support bar. The raised section can comprise protrusions at the top surface of the arched central portion for preventing the movement of the arrangement regarding to the support bar of the vehicle. The protrusions can be directed in direction parallel to the support bar of the vehicle. The protrusions can be arranged at a distance to each other.

The first end and/or the second end of the raised section and the plate can comprise a through hole for fastening means, for example bolts and nuts, with which the first and the second bracket part can be fastened to the third bracket part. The first end of the raised section can comprise a hinge for releasably connecting the third bracket part to the second bracket part. In this case, the second end of the raised section and the plate can comprise a through hole for fastening means, for example bolt and nut, for fastening the third bracket part to the first and the second bracket parts.

The third bracket part is intended to be placed to the top side of the mudguard, on the first bracket part. The third bracket part is an arched structure which is intended to be mounted around the support bar of a vehicle and attached to the first and the second bracket parts, so that the support bar is arrangeable between the third bracket part and the arched central portions of the first and the second bracket parts. The third bracket part has an arc radius which is slightly larger than the radius of the support bar of the vehicle, so that the support bar at least partly fits in the third bracket part. Preferably, the third bracket part is adapted to the support bar, so that they can be fastened to each other in a dependable way. The third bracket part can comprise protrusions at the inner surface against the support bar of the vehicle for keeping the arrangement in place regarding to the support bar. Preferably, the protrusions are directed at the same direction as the axis of the support bar. The protrusions can be arranged at a distance to each other.

The third bracket part comprises a first end and a second end. The third bracket part can be releasably attached to the first bracket part and to the raised section of the second bracket part which is arranged through the aperture of the first bracket part. Preferably, the first end of the third bracket part is releasably attached to the first end of the raised section of the second bracket part and the second end of the third bracket part is releasably attached to the second end of the raised section of the second bracket part and to the first bracket part. The attachment can be made with fastening means, for example, bolts and nuts and/or a hinge. The third bracket part can be connected to the first and the second bracket parts attached to the mudguard just before mounting the mudguard to the support bar of the vehicle.

The first and the second bracket parts are releasably attachable to each other by the first quick clamping member arranged to the first bracket part and the counterpart of the first quick clamping member arranged to the second bracket part. This means that the first and the second bracket parts are attached to each other by quick clamping. With the quick clamping is here meant a quick and simple attachment of two counterparts that fits to each other. The quick clamping means the attachment that is made without other fastening means such as bolts and nuts. The first and the second bracket parts are also quickly and easily detachable from each other when using the quick clamping. With the quick clamping can be meant attaching the parts for example by snap fit joint or by a quick coupling. The first quick clamping member can be, for example, a claw, hook or a protrusion. In that case, the counterpart of the first quick clamping member can be, for example, a recess or a notch where the first quick clamping member fits. The first quick clamping member can also be, for example, a recess or a notch, when the counterpart of the first quick clamping member can be, for example, a claw, hook or a protrusion.

The first quick clamping member is arranged to the aperture of the first bracket part. The first quick clamping member can be located at the longitudinal side of the aperture, preferably near the bottom edge. The first quick clamping member is preferably located substantially in the middle of the aperture in the longitudinal direction of the aperture. The first quick clamping member and the first bracket part can be formed as a single piece. The counterpart of the first quick clamping member can be arranged to the longitudinal side of the raised section of the second bracket part. Preferably, the counterpart of the first quick clamping member is located substantially in the middle of the raised section, under the arching of the central portion of the raised section. The counterpart of the first quick clamping member and the second bracket part can be formed as a single piece. Preferably, the first quick clamping member and the counterpart of the first quick clamping member are located in corresponding places in the first and the second bracket parts when during the assembly of the arrangement, the first quick clamping member and the counterpart of the first quick clamping member can be attached to each other.

The first bracket part can comprise a second quick clamping member arranged to the opposite side of the aperture of the first bracket part than the first quick clamping member. The second bracket part can comprise a counterpart of the second quick clamping member arranged to an opposite side of the raised section of the second bracket part than the counterpart of the first quick clamping member. In this way the attachment between the first bracket part and the second bracket part can be more even and durable. The first bracket part can comprise more than two quick clamping members and the second bracket part can comprise more than two counterparts of the quick clamping member. Preferably, the number of the quick clamping members is even, and the quick clamping members locate to the corresponding places to the opposing sides of the aperture. Correspondingly, the number of the counterparts of the quick clamping member is preferably even, and the counterparts are located to the corresponding places to the opposing sides of the raised section of the second bracket part.

The mudguard bracket arrangement according to the invention can be assembled with the mudguard for example by placing the second bracket part to the bottom side of the mudguard so that the raised section is arranged through the aperture of the mudguard and the top surface of the plate is placed against the bottom surface of the mudguard. The first bracket part is placed on the top side of the mudguard in such a manner that the raised section which is arranged through the aperture of the mudguard is arranged also through the aperture the first bracket part. The fist bracket part and the second bracket part are pressed together when the first quick clamping member and the counterpart of the first quick clamping member are attached to each other and the first and the second bracket parts are secured to each other. The mudguard is sandwiched between the first and the second bracket parts. Then, the first end of the third bracket part is connected to the first end of the raised section of the second bracket part, preferably with a hinge. The second end of the third bracket part is connected to the first bracket part and the second end of the raised section of the second bracket part with the fastening means, for example, with bolt and nut. The fastening means are arranged through the hole in the plate and the second end of the raised section of the second bracket part and the aperture of the first bracket part. The mudguard bracket arrangement assembled to the mudguard is lifted to the support bar of the vehicle so that the support bar stays between the third bracket part and the arched central portions of the raised section of the second bracket part and the first bracket part.

An advantage of the mudguard bracket arrangement according to the invention is that it is easy and quick to assemble to the mudguard and to the support bar of the vehicle. Another advantage of the mudguard bracket arrangement according to the invention is that the mudguard can be delivered to the end-user without the third bracket part attached to it. The quick clamping between the first and the second bracket parts enables the parts to be assembled to each other and to the mudguard so that the mudguard is sandwiched between the parts without using the third bracket part or other fastening means. The mudguards assembled like this can be packed and stacked on to each other more easily because the third bracket part is not taking an additional space. When the mudguards can be packed to the smaller space, the transportation costs are also reduced. Yet another advantage of the mudguard bracket arrangement according to the invention is that the arrangement enables fast and easy installation of the mudguard to the support bar of the vehicle saving the work time and load of the end-user. Still another advantage of the mudguard bracket arrangement is that the third bracket part can be easily and quickly replaced if it breaks without disassembling the whole arrangement.

According to an embodiment of the invention the first bracket part comprises a second quick clamping member and the second bracket part comprises a counterpart of the second quick clamping member for securing the first and the second bracket part to each other. The first bracket part and the second bracket part are releasably attachable to each other by the second quick clamping member arranger to the first bracket part and the counterpart of the second quick clamping member arranged to the second bracket part. This means that the first and the second bracket parts are attached to each other by quick clamping. The second quick clamping member can be, for example, a claw, hook or a protrusion and the counterpart of the second quick clamping member can be, for example, a recess or a notch where the first quick clamping member fits, or vice versa. Preferably, the second quick clamping member is similar with the first quick clamping member and the counterpart of the second quick clamping member is similar with the counterpart of the second quick clamping member.

The second quick clamping member can be arranged to the aperture of the first bracket part. The second quick clamping member can be located at the longitudinal side of the aperture, preferably near the bottom edge. Preferably, the second quick clamping member is located opposite to the first quick clamping member. The second quick clamping member is preferably located substantially in the middle of the aperture in the longitudinal direction of the aperture at the corresponding position with the first quick clamping member. The second quick clamping member and the second bracket part can be formed as a single piece. The counterpart of the second quick clamping member can be arranged to the side, preferably, to the longitudinal side of the raised section of the second bracket part. Preferably, the counterpart of the second quick clamping member is located substantially in the middle of the raised section, under the arching of the central portion of the raised section. Preferably, the counterpart of the second quick clamping member is located to the opposing side of the raised section as the counterpart of the first quick clamping member. The counterpart of the second quick clamping member and the second bracket part can be formed as a single piece. Preferably, the second quick clamping member and the counterpart of the second quick clamping member are located in corresponding places in the first and the second bracket parts when during the assembly of the arrangement, the second quick clamping member and the counterpart of the second quick clamping member can be attached to each other. The second quick clamping member and the counterpart of the second quick clamping member enable even and durable attachment of the first and the second bracket parts.

According to an embodiment of the invention the first quick clamping member is arranged to the first side of the aperture of the first bracket part and the second quick clamping member is arranged to the second side of the aperture of the first bracket part. The first side of the aperture is preferably opposite to the second side of the aperture. The first side and the second side are preferably the longitudinal sides of the aperture. Preferably, the first and the second quick clamping members are located at the lower edge of the aperture, near the bottom of the first bracket part. When the first and the second quick clamping members are arranged to the first and the second side of the aperture, the first and the second bracket parts are quick and easy to attach to each other.

According to an embodiment of the invention the counterpart of the first quick clamping member is arranged to the first side of the raised section of the second bracket part and the counterpart of the second quick clamping member is arranged to the second side of the raised section of the second bracket part. The first side of the raised section is preferably opposite to the second side of the raised section. The first side and the second side of the raised section are preferably the longitudinal sides. Preferably, the counterparts of the first and the second quick clamping member are located under the arching of the central portion of the raised section. The counterparts of the first and the second quick clamping member arranged to the first and the second side of the raised section makes the attachment of the first and the second bracket parts quick and easy.

According to an embodiment of the invention the first and the second quick clamping members are located substantially in the middle of the first bracket part and the counterparts of the first and the second quick clamping member are located substantially in the middle of the raised section of the second bracket part. This enables that when the first and the second bracket parts are assembled together, the quick clamping members and the counterparts of them are at the corresponding places and can be attached to each other easily by pressing.

According to an embodiment of the invention the first quick clamping member and the counterpart of the first quick clamping member and the second quick clamping member and the counterpart of the second quick clamping member are releasably attachable with a snap fit joint. Snap fit joints are simple, economical and rapid way of joining the first and the second bracket parts to each other. With a snap fit joint is here meant a joint consists of two members. The first snap fit member is a flexible member which is acting like a cantilever which bends and returns to its original position during snapping action. The first snap fit member can be for example a hook, claw or a protrusion. The second snap fit member holds the cantilever having sufficient space to accommodate the flexing of cantilever. The second snap fit member can be for example a recess or a notch. The first and the second snap fit members are easily and quickly joined together by snapping. The snap fit joint is preferably detachable.

According to an embodiment of the invention the first and the second quick clamping members are integral with the first bracket part and the counterparts of the first and the second quick clamping member are integral with the second bracket part. This means that the first and the second quick clamping members and the first bracket part are made of a single piece. Correspondingly, the counterparts of the first and the second quick clamping member and the second bracket part are made of a single piece. Integral structure is stronger and more durable because there are no joints between the parts.

According to an embodiment of the invention the first and the second quick clamping members is a claw. In this case the counterpart of the first and the second quick clamping member can be a recess or a notch. The claw can be straight or slightly arched. Preferably, the claw is attached to the side of the aperture of the first bracket part and directed perpendicularly outwards from the side i.e. towards to the center of the aperture. The length of the claw can be for example 10-20 mm and the width can be for example 1-3 mm. The claw is a simple and reliable structure for use as a quick clamping member.

According to an embodiment of the invention the counterpart of the first and the second quick clamping member is a recess. In this case the first and the second quick clamping member can be a hook, claw or a protrusion. Preferably, the recess has the shape and the size where the countering first and the second quick clamping member can be fitted. The recess is preferably arranged to the side of the raised section, under the arching. The recess is a simple and reliable structure for use as a counterpart of the clamping member.

According to an embodiment of the invention the second bracket part comprises protrusions at the top surface of the raised section which protrusions are arranged at a distance to each other for preventing the movement of the mudguard bracket arrangement relating to the support bar. Preferably, the protrusions are located at the top surface of the arched central portion of the raised section. The mudguard bracket arrangement can comprise at least two, preferably 2-20, most preferably 10 protrusions arranged at a distance to each other. Preferably, the protrusions are arranged at the direction parallel to the support bar of the vehicle. The protrusions can reach from one longitudinal side of the raised section to another longitudinal side so that they reach over the whole top surface of the raised section or the protrusion can reach partially over the top surface. When the mudguard is mounted to the support bar of the vehicle, the protrusions are arranged against the support bar when they prevent the movement between the mudguard bracket arrangement and the support bar of the vehicle.

According to an embodiment of the invention the third bracket part is releasably attachable to the second bracket part with a hinge. The hinge comprises a recess arranged to the end of the third bracket part and a hook arranged to the end of the raised section of the second bracket part. The recess is preferably arranged to the first end of the third bracket part and the hook is preferably arranged to the first end of the raised section of the second bracket part. The third bracket part is releasably attachable to the second bracket part by arranging the recess of the third bracket part to the hook of the raised section of the second bracket part. The third bracket part can be moved relating to the second bracket part. The hinge enables the attachment between the third and the second bracket part to be releasable and executed without fastening means such as bolts and nuts. The mudguard bracket arrangement comprising the hinge between the third and the second bracket part is also easy and quick to fasten to the support member of the vehicle and also easy and quick to unfasten from it.

According to an embodiment of the invention the first, the second and the third bracket parts are made of a plastic. The used plastic can be for example polyamide or high-density polyethylene. The plastic can be fibre-reinforced for increasing durability of the mudguard bracket arrangement. The advantage of using plastics is that the mudguard bracket arrangement is lighter and has increased resistance against chemicals and does not rust.

The present invention relates also to a use of the mudguard bracket arrangement according to the invention for fastening a mudguard to a support bar of a vehicle. The mudguard is fastened to the support bar of a vehicle with at least one mudguard bracket arrangement. Preferably, the mudguard is fastened to the support bar of a vehicle with two mudguard bracket arrangements. More than two mudguard bracket arrangements can be used. If a vehicle has more than one support bar, for example two support bars, per one mudguard, at least one mudguard bracket arrangement is used for fastening the mudguard to each support bar. Preferably, two mudguard bracket arrangements are used per support bar.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated in those claims.

The exemplary embodiments presented in this text and their advantages relate by applicable parts to the mudguard bracket arrangement as well as the use according to the invention, even though this is not always separately mentioned.

### BRIEF DESCRIPTION OF THE DRAWINGS

- Fig. 1: illustrates a mudguard bracket arrangement according to an embodiment of the invention as an exploded view,
- fig. 2: illustrates a first bracket according to an embodiment of the invention from above,
- fig. 3: illustrates a second bracket part according to an embodiment of the invention from the second side,
- fig. 4: illustrates a mudguard bracket arrangement according to an embodiment of the invention fastened to a mudguard.

### DETAILED DESCRIPTION OF THE DRAWINGS

The same reference signs are used of the same or like components in different embodiments.

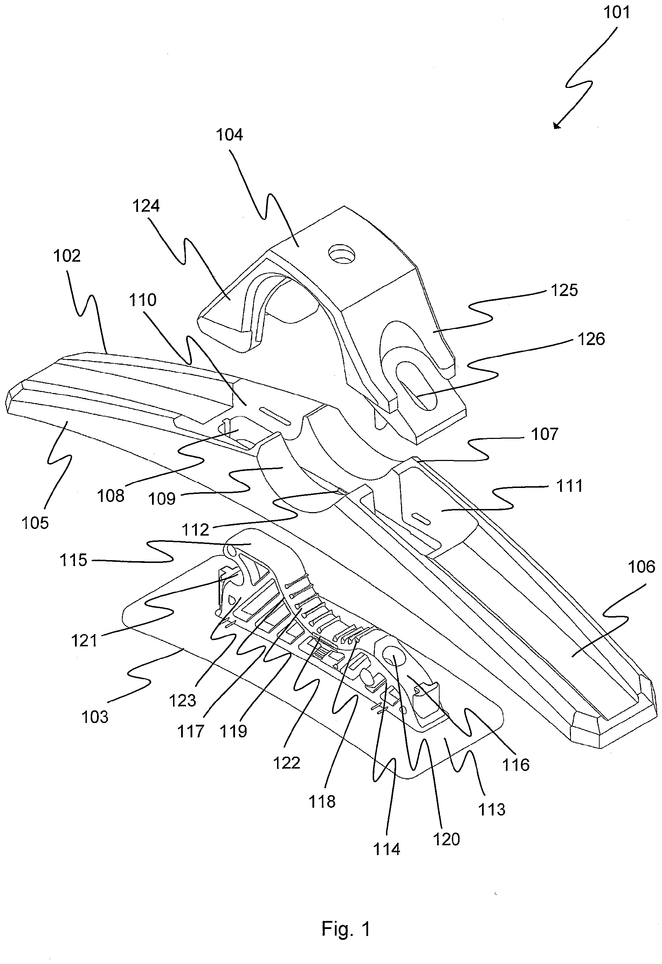

Fig. 1 illustrates a mudguard bracket arrangement according to an embodiment of the invention as an exploded view. The mudguard bracket arrangement 101 comprises a first bracket part 102, a second bracket part 103 and a third bracket part 104. The first bracket part 102 is intended to be arranged on the top side of the mudguard. The first bracket part 102 is an elongated structure and slightly arched downwards. The first bracket part 102 comprises first end 105 and a second end 106 and between these a central portion 107. The central portion 107 is elevated so that the first bracket part 102 is thicker from the central portion 107 than from the first end 105 and the second end 106. An elongated aperture 108 locates substantially in the middle of the first bracket part 102, in the central portion 107. The first bracket part 102 comprises an arching 109 at the middle of the central portion 107 for adapting to the support bar of a vehicle. At the central portion 107 of the first bracket part 102, there is a first 110 and a second mounting point 111 for a third bracket part.

The first bracket part 102 comprises a first (not shown) and a second claw 112 for securing the first 102 and the second bracket part 103 to each other. The first and the second claw 112 are arranged substantially in the middle of the longitudinal side of the aperture 108, opposite to each other. The first and the second claw 112 locate near the bottom edge of the aperture 108 and are directed towards the center of the aperture 108.

The second bracket part 103 comprises a plate 113 with a raised section 114. The plate 113 is intended to be arranged on a bottom side of the mudguard and the raised section 114 is intended to be arranged through the aperture 108 of the first bracket part 102. The plate 113 is a substantially planar, elongated structure and slightly arched downwards. The raised section 114 is attached to the top surface of the plate 113. The raised section 114 is elongated in the same direction as the plate 113. The raised section 114 is located substantially in the middle of the plate 113 in lateral direction and closer to another end in the longitudinal direction of the plate 113. The raised section 114 comprises a first end 115 and a second end 116 between which the raised section comprises a central portion 117. The central portion 117 of the raised section 114 is arched towards the plate 113 for adapting to the support bar of a vehicle. The raised section 114 comprises protrusions 118 at the top surface 119 of the arched central portion 117. The protrusions 118 are directed crosswise to the top surface 119 of the raised section 114 and arranged at a distance to each other. The second end 116 of the raised section 114 and the plate 113 comprise a through hole 120 for fastening means, such as bolt. The first end 115 of the raised section 114 comprises a hook 121 for releasably connecting the third bracket part 104 to the second bracket part 103.

The second bracket part 103 comprises plurality of first 122 and second recesses (not shown) for securing the first 102 and the second bracket part 103 to each other. The plurality of the first recesses 122 are arranged to a first longitudinal side 123 of the raised section 114 and the second recesses are arranged to opposite second longitudinal side of the raised section 114, substantially in the middle of it. The first 122 and the second recesses are located under the arching of the central portion 117 of the raised section 114. The second bracket part 103 comprises five first recesses 122 arranged on below to other. The first 122 and the second recesses of the second bracket part 103 and the first and the second claw 112 of the first bracket part 102 are counterparts to each other and locate in corresponding places in such a manner that when assembling the arrangement 101, the first and the second claw 112 and the first 122 and the second recess can be attached to each other by snap fit joint.

The third bracket part 104 is releasably attachable to the first 102 and the second bracket part 103 for connecting the first 102 and the second bracket part 103 to the support bar of a vehicle. The third bracket part 104 is an arched structure which is intended to adapt to the support bar of a vehicle. The third bracket part 104 has a first end 124 and a second end 125. At its first end 124 the third bracket part 104 comprises a recess (not shown) for connecting to the hook 121 of the raised section 114 of the second bracket part 103. At the second end 125, the third bracket part 104 comprises a recess 126 for fastening means, such as a bolt, by which the third 104, the second 103 and the first bracket part 102 are intended to be attached to each other.

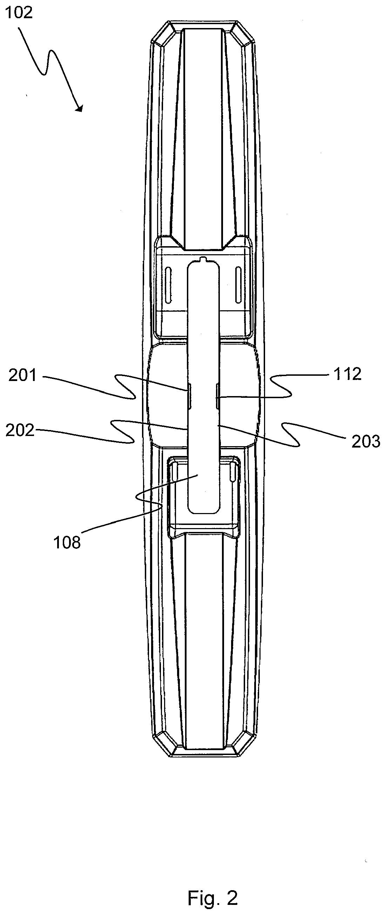

Fig. 2 illustrates a first bracket part of fig 1. from above. In figure 2, the first 201 and the second claw 112 of the first bracket part 102 are better shown. The first 201 claw locates substantially in the middle of the first longitudinal side 202 of the aperture 108 of the first bracket part 102. The second claw 112 locates opposite to the first claw 201, at the second longitudinal side 203 of the aperture 108 of the first bracket part 102. The first 201 and the second claw 112 direct towards the centre of the aperture 108.

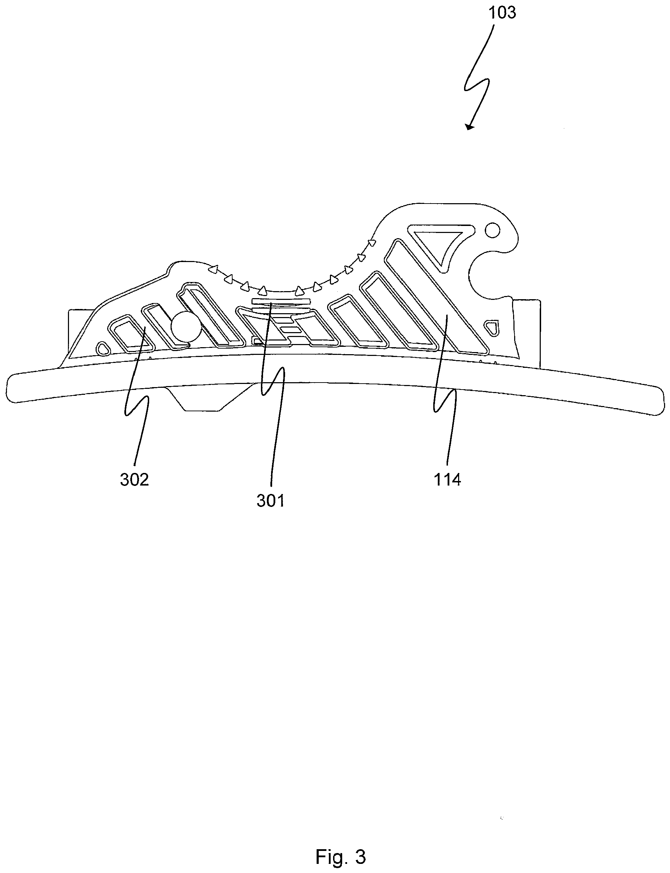

Fig. 3 illustrates a second bracket part of fig. 1 from the second side. In figure 3, the second recesses 301 are better shown. The second recesses 301 are arranged substantially in the middle of the second longitudinal side 302 of the raised section 114, below the arching. The second bracket part 103 comprises five second recesses 301 arranged on below to other. The second recesses 301 locate in the corresponding places regarding to the first recesses at the first longitudinal side of the raised section 114.

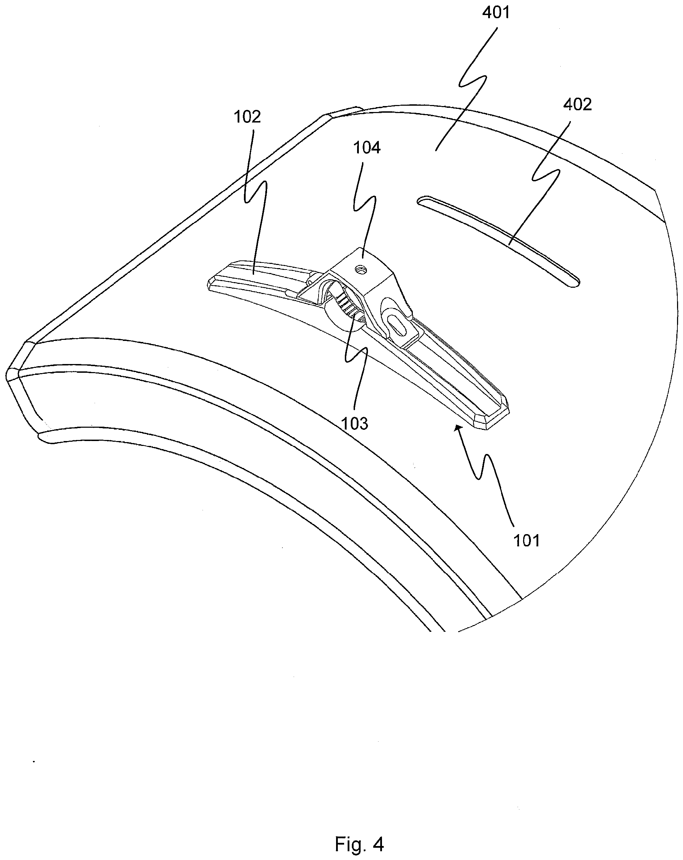

Fig. 4 illustrates a mudguard bracket arrangement of fig. 1 fastened to a mudguard. The mudguard 401 has an arched shape and substantially planar top and bottom surfaces. The mudguard 401 comprises two apertures 402 for the mudguard bracket arrangement 101. The apertures 402 are elongated in a longitudinal direction of the mudguard 401 i.e. in a rotational direction of the wheel of the vehicle.

When the mudguard bracket arrangement 101 is fastened to the mudguard 401, the first bracket part 102 is placed on the top side of the mudguard 401 and the second bracket part 103 is placed to the bottom side of the mudguard 401. The aperture 108 of the first bracket part and the aperture of the mudguard 401 are arranged on top of the other. Then, the raised section 114 of the second bracket part 103 is arranged through the aperture 108 of the first bracket part 102 and the aperture of the mudguard 401. The first and the second recesses of the second bracket part 103 are attached to the first and the second claw of the first bracket part 102. The recesses and claws secure the first 102 and the second bracket parts 103 to each other by snap fit joint. The plate of the second bracket part 103 is in contact with the bottom surface of the mudguard 401 and the mudguard 401 is sandwiched between the first 102 and the second bracket parts 103.

Next, the recess at the first end of the third bracket part 104 is connected to the hook at the first end of the raised section of the second bracket part 103. The second end of the third bracket part 104 is connected to the first bracket part 102 and the second end of the raised section of the second bracket part 103 with the fastening means, for example, with bolt and nut. The fastening means are arranged through the hole in the second end of the raised section and the plate of the second bracket part 103 and the aperture 108 of the first bracket part 102. The mudguard 401 can be fastened to the support bar of a vehicle by the mudguard bracket arrangement 101. The mudguard bracket arrangement 101 attached to the mudguard 401 can be lifted to the support bar of the vehicle so that the support bar is arranged between the third bracket part 104 and the arched central portions of the raised section of the second bracket part 103 and the first bracket part 102. The mudguard 104 is intended to be fastened to the support bar of a vehicle with two mudguard bracket arrangements 101 arranged next to each other.

Only advantageous exemplary embodiments of the invention are described in the figures. It is clear to a person skilled in the art that the invention is not restricted only to the examples presented above, but the invention may vary within the scope of the claims presented hereafter. Some possible embodiments of the invention are described in the dependent claims.

## Claims

1. A mudguard bracket arrangement (101) for fastening a mudguard (401) to a support bar of a vehicle, the arrangement (101) comprising:
- a first bracket part (102) arrangeable on a top side of the mudguard (401), the first bracket part (102) comprising an aperture (108),
- a second bracket part (103) comprising a plate (113) with a raised section (114), the plate (113) being arrangeable on a bottom side of the mudguard (401) and the raised section (114) being arrangeable through the aperture (108) of the first bracket part (102),
- a third bracket part (104) releasably attachable to the first (102) and the second bracket part (103) for connecting the first (102) and the second bracket parts (103) to the support bar of a vehicle,
**characterised in that** the first bracket part (102) comprises a first quick clamping member (201) and the second bracket part (103) comprises a counterpart of the first quick clamping member (122) for securing the first (102) and the second bracket part (103) to each other.

2. The mudguard bracket arrangement (101) according to claim 1, **characterised in that** the first bracket part (102) comprises a second quick clamping member (112) and the second bracket part (103) comprises a counterpart of the second quick clamping member (301) for securing the first (102) and the second bracket part (103) to each other.

3. The mudguard bracket arrangement (101) according to claim 2, **characterised in that** the first quick clamping member (201) is arranged to the first side (202) of the aperture (108) of the first bracket part (102) and the second quick clamping member (112) is arranged to the second side (203) of the aperture (108) of the first bracket part (102).

4. The mudguard bracket arrangement (101) according to claim 2 or 3, **characterised in that** the counterpart of the first quick clamping member (122) is arranged to the first side (123) of the raised section (114) of the second bracket part (103) and the counterpart of the second quick clamping member (301) is arranged to the second side (302) of the raised section (114) of the second bracket part (103).

5. The mudguard bracket arrangement (101) according to any of the preceding claims 2-4, **characterised in that** the first (201) and the second quick clamping members (112) are located substantially in the middle of the first bracket part (102) and the counterparts of the first (122) and the second quick clamping member (301) are located substantially in the middle of the raised section (114) of the second bracket part (102).

6. The mudguard bracket arrangement (101) according to any of the preceding claims 2-5, **characterised in that** the first quick clamping member (201) and the counterpart of the first quick clamping member (122) and the second quick clamping member (112) and the counterpart of the second quick clamping member (301) are releasably attachable with a snap fit joint.

7. The mudguard bracket arrangement (101) according to any of the preceding claims 2-6, **characterised in that** the first (201) and the second quick clamping members (112) are integral with the first bracket part (102) and the counterparts of the first (122) and the second quick clamping member (301) are integral with the second bracket part (103).

8. The mudguard bracket arrangement (101) according to any of the preceding claims 2-7, **characterised in that** the first (201) and the second quick clamping members (112) is a claw.

9. The mudguard bracket arrangement (101) according to any of the preceding claims 2-8, **characterised in that** the counterpart of the first (122) and the second quick clamping member (301) is a recess.

10. The mudguard bracket arrangement (101) according to any of the preceding claims, **characterised in that** the second bracket part (103) comprises protrusions (118) at the top surface (119) of the raised section (114) which protrusions (118) are arranged at a distance to each other.

11. The mudguard bracket arrangement (101) according to any of the preceding claims, **characterised in that** the third bracket part (104) is releasably attachable to the second bracket part (103) with a hinge.

12. The mudguard bracket arrangement (101) according to any of the preceding claims, **characterised in that** the first (102), the second (103) and the third bracket parts (104) are made of a plastic.

13. A use of the mudguard bracket arrangement (101) according to any of the preceding claims 1-12 for fastening a mudguard (401) to a support bar of a vehicle.

## Patentansprüche

1. Kotflügelhalterungsanordnung (101) zum Befestigen eines Kotflügels (401) an einer Tragstange eines Fahrzeugs, wobei die Anordnung (101) Folgendes umfasst:
- ein erstes Halterungsteil (102), das an einer Oberseite des Kotflügels (401) anordenbar ist, wobei das erste Halterungsteil (102) eine Öffnung (108) umfasst,
- ein zweites Halterungsteil (103) mit einer Platte (113) mit einem erhöhten Abschnitt (114), wobei die Platte (113) an einer Unterseite des Kotflügels (401) anordenbar ist und der erhöhte Abschnitt (114) durch die Öffnung (108) des ersten Halterungsteils (102) anordenbar ist,
- ein drittes Halterungsteil (104), das lösbar an dem ersten (102) und dem zweiten Halterungsteil (103) anbringbar ist, um das erste (102) und das zweite Halterungsteil (103) mit der Tragstange eines Fahrzeugs zu verbinden,
**dadurch gekennzeichnet, dass** das erste Halterungsteil (102) ein erstes Schnellspannelement (201) umfasst, und das zweite Halterungsteil (103) ein Gegenstück des ersten Schnellspannelements (122) umfasst, um das erste (102) und das zweite Halterungsteil (103) aneinander zu befestigen.

2. Kotflügelhalterungsanordnung (101) nach Anspruch 1, **dadurch gekennzeichnet, dass** das erste Halterungsteil (102) ein zweites Schnellspannelement (112) umfasst, und das zweite Halterungsteil (103) ein Gegenstück des zweiten Schnellspannelements (301) umfasst, um das erste (102) und das zweite Halterungsteil (103) aneinander zu befestigen.

3. Kotflügelhalterungsanordnung (101) nach Anspruch 2, **dadurch gekennzeichnet, dass** das erste Schnellspannelement (201) an der ersten Seite (202) der Öffnung (108) des ersten Halterungsteils (102) angeordnet ist, und das zweite Schnellspannelement (112) an der zweiten Seite (203) der Öffnung (108) des ersten Halterungsteils (102) angeordnet ist.

4. Kotflügelhalterungsanordnung (101) nach Anspruch 2 oder 3, **dadurch gekennzeichnet, dass** das Gegenstück des ersten Schnellspannelements (122) an der ersten Seite (123) des erhöhten Abschnitts (114) des zweiten Halterungsteils (103) angeordnet ist, und das Gegenstück des zweiten Schnellspannelements (301) an der zweiten Seite (302) des erhöhten Abschnitts (114) des zweiten Halterungsteils (103) angeordnet ist.

5. Kotflügelhalterungsanordnung (101) nach einem der vorhergehenden Ansprüche 2 bis 4,
**dadurch gekennzeichnet, dass** sich das erste (201) und das zweite Schnellspannelement (112) im Wesentlichen in der Mitte des ersten Halterungsteils (102) befinden, und die Gegenstücke des ersten (122) und des zweiten Schnellspannelements (301) im Wesentlichen in der Mitte des erhöhten Abschnitts (114) des zweiten Halterungsteils (102) angeordnet sind.

6. Kotflügelhalterungsanordnung (101) nach einem der vorhergehenden Ansprüche 2 bis 5, **dadurch gekennzeichnet, dass** das erste Schnellspannelement (201) und das Gegenstück des ersten Schnellspannelements (122) und das zweite Schnellspannelement (112) und das Gegenstück des zweiten Schnellspannelements (301) mit einer Schnappverbindung lösbar anbringbar sind.

7. Kotflügelhalterungsanordnung (101) nach einem der vorhergehenden Ansprüche 2 bis 6, **dadurch gekennzeichnet, dass** das erste (201) und das zweite Schnellspannelement (112) einstückig mit dem ersten Halterungsteil (102) sind, und die Gegenstücke des ersten (122) und des zweiten Schnellspannelements (301) einstückig mit dem zweiten Halterungsteil (103) sind.

8. Kotflügelhalterungsanordnung (101) nach einem der vorhergehenden Ansprüche 2 bis 7, **dadurch gekennzeichnet, dass** das erste (201) und das zweite Schnellspannelement (112) eine Klaue ist.

9. Kotflügelhalterungsanordnung (101) nach einem der vorhergehenden Ansprüche 2 bis 8, **dadurch gekennzeichnet, dass** das Gegenstück des ersten (122) und des zweiten Schnellspannelements (301) eine Aussparung ist.

10. Kotflügelhalterungsanordnung (101) nach einem der vorhergehenden Ansprüche, **dadurch gekennzeichnet, dass** das zweite Halterungsteil (103) Vorsprünge (118) an der oberen Fläche (119) des erhöhten Abschnitts (114) umfasst, wobei die Vorsprünge (118) mit Abstand zueinander angeordnet sind.

11. Kotflügelhalterungsanordnung (101) nach einem der vorhergehenden Ansprüche, **dadurch gekennzeichnet, dass** das dritte Halterungsteil (104) mit einem Scharnier lösbar an dem zweiten Halterungsteil (103) befestigbar ist.

12. Kotflügelhalterungsanordnung (101) nach einem der vorhergehenden Ansprüche, **dadurch gekennzeichnet, dass** das erste (102), das zweite (103) und das dritte Halterungsteil (104) aus einem Kunststoff bestehen.

13. Verwendung der Kotflügelhalterungsanordnung (101) nach einem der vorhergehenden Ansprüche 1 bis 12 zum Befestigen eines Kotflügels (401) an einer Tragstange eines Fahrzeugs.

## Revendications

1. Agencement de support de garde-boue (101) pour fixer un garde-boue (401) à une barre de support d'un véhicule, l'agencement (101) comprenant :
- une première partie de support (102) pouvant être agencée sur un côté supérieur du garde-boue (401), la première partie de support (102) comprenant une ouverture (108),
- une deuxième partie de support (103) comprenant une plaque (113) avec une section surélevée (114), la plaque (113) pouvant être agencée sur un côté inférieur du garde-boue (401) et la section surélevée (114) pouvant être agencée à travers l'ouverture (108) de la première partie de support (102),
- une troisième partie de support (104) pouvant être fixée de manière amovible à la première (102) et à la deuxième partie de support (103) pour relier la première (102) et la deuxième parties de support (103) à la barre de support d'un véhicule,
**caractérisé en ce que** la première partie de support (102) comprend un premier élément de serrage rapide (201) et la deuxième partie de support (103) comprend une contrepartie du premier élément de serrage rapide (122) pour fixer la première (102) et la deuxième partie de support (103) l'une à l'autre.

2. Agencement de support de garde-boue (101) selon la revendication 1, **caractérisé en ce que** la première partie de support (102) comprend un second élément de serrage rapide (112) et la deuxième partie de support (103) comprend une contrepartie du second élément de serrage rapide (301) pour fixer la première (102) et la deuxième partie de support (103) l'une à l'autre.

3. Agencement de support de garde-boue (101) selon la revendication 2, **caractérisé en ce que** le premier élément de serrage rapide (201) est agencé sur le premier côté (202) de l'ouverture (108) de la première partie de support (102) et le second élément de serrage rapide (112) est agencé sur le second côté (203) de l'ouverture (108) de la première partie de support (102).

4. Agencement de support de garde-boue (101) selon la revendication 2 ou 3, **caractérisé en ce que** la contrepartie du premier élément de serrage rapide (122) est agencée sur le premier côté (123) de la section surélevée (114) de la deuxième partie de support (103) et la contrepartie du second élément de serrage rapide (301) est agencée sur le second côté (302) de la section surélevée (114) de la deuxième partie de support (103).

5. Agencement de support de garde-boue (101) selon l'une quelconque des revendications précédentes 2 à 4, **caractérisé en ce que** le premier (201) et le second éléments de serrage rapide (112) sont situés sensiblement au milieu de la première partie de support (102) et les contreparties du premier (122) et du second élément de serrage rapide (301) sont situées sensiblement au milieu de la section surélevée (114) de la deuxième partie de support (102).

6. Agencement de support de garde-boue (101) selon l'une quelconque des revendications précédentes 2 à 5, **caractérisé en ce que** le premier élément de serrage rapide (201) et la contrepartie du premier élément de serrage rapide (122) et le second élément de serrage rapide (112) et la contrepartie du second élément de serrage rapide (301) peuvent être fixés de manière amovible avec un raccord à encliqueter.

7. Agencement de support de garde-boue (101) selon l'une quelconque des revendications précédentes 2 à 6, **caractérisé en ce que** le premier (201) et le second éléments de serrage rapide (112) font partie intégrante de la première partie de support (102) et les contreparties du premier (122) et du second élément de serrage rapide (301) font partie intégrante de la deuxième partie de support (103).

8. Agencement de support de garde-boue (101) selon l'une quelconque des revendications précédentes 2 à 7, **caractérisé en ce que** le premier (201) et le second éléments de serrage rapide (112) sont une pince.

9. Agencement de support de garde-boue (101) selon l'une quelconque des revendications précédentes 2 à 8, **caractérisé en ce que** la contrepartie du premier (122) et du second élément de serrage rapide (301) est un évidement.

10. Agencement de support de garde-boue (101) selon l'une quelconque des revendications précédentes, **caractérisé en ce que** la deuxième partie de support (103) comprend des saillies (118) au niveau de la surface supérieure (119) de la section surélevée (114), lesquelles saillies (118) sont agencées à distance les unes des autres.

11. Agencement de support de garde-boue (101) selon l'une quelconque des revendications précédentes, **caractérisé en ce que** la troisième partie de support (104) peut être fixée de manière amovible à la deuxième partie de support (103) avec une charnière.

12. Agencement de support de garde-boue (101) selon l'une quelconque des revendications précédentes, **caractérisé en ce que** la première (102), la deuxième (103) et la troisième parties de support (104) sont en plastique.

13. Utilisation de l'agencement de support de garde-boue (101) selon l'une quelconque des revendications précédentes 1 à 12 pour fixer un garde-boue (401) à une barre de support d'un véhicule.
